# EUROPÄISCHE PATENTANMELDUNG

(11) **EP 4 670 486 A1**
(43) Veröffentlichungstag der Anmeldung: **31.12.2025**
(21) Anmeldenummer: 25176613.5
(22) Anmeldetag: 15.05.2025
(51) Int. Cl.: A01D 41/127, B60R 1/22

(54) **LANDWIRTSCHAFTLICHE ARBEITSMASCHINE UND VERFAHREN**

(30) Priorität: 26.06.2024 DE 102024118043
(71) Anmelder: CLAAS Selbstfahrende Erntemaschinen GmbH, 33428 Harsewinkel (DE)
(72) Erfinder: Thiesmann, Waldemar, 49080 Osnabrück (DE); Wagner, Thomas, 33803 Steinhagen (DE)
(74) Vertreter: CLAAS Gruppe

(57) **Zusammenfassung**

Die Erfindung betrifft eine Landwirtschaftliche Arbeitsmaschine (1), vorzugsweise Mähdrescher oder Feldhäcksler, mit einer zum Anzeigen von Bilddaten und Prozessdaten eingerichteten Visualisierungseinrichtung (3). Die Arbeitsmaschine (1) weist eine Überwachungseinrichtung (10) mit einem Kamerasystemen (11, 12, 13, 14, 15) zum Erfassen von Sichtbereichen (21, 22, 23, 24, 25) im Umfeld der Arbeitsmaschine (1), ein Reinigungssystem (18) zum Reinigen des Kamerasystems (11, 12, 13, 14, 15) und eine Datenverarbeitungseinheit (20) auf, wobei die Datenverarbeitungseinheit (20) zur Generierung von kontextrelevanten Prozessdaten der Arbeitsmaschine (1) und Bilddaten jeweils auf Grundlage von den erfassten Sichtbereichen (21, 22, 23, 24, 25) eingerichtet ist, und wobei Kameras (11.1, 11.2, 11.3) des Kamerasystems (11, 12, 13, 14, 15) an wenigstens einer Tragstruktur (5) der Arbeitsmaschine (1) und mit fester räumlicher Zuordnung zueinander befestigt vorgesehen sind. Die Erfindung betrifft ferner ein Verfahren zum Betreiben.

## Beschreibung

Die vorliegende Erfindung eine landwirtschaftliche Arbeitsmaschine. Die Erfindung betrifft ferner ein Verfahren zum Betreiben der landwirtschaftlichen Arbeitsmaschine.

Aus der Praxis ist eine landwirtschaftliche Arbeitsmaschinen mit einem Kamerasystem und mit einer Visualisierungseinrichtung bekannt. Die Visualisierungseinrichtung kann einem Maschinenführer Inhalte bzw. Daten anzeigen, die zumindest mittelbar vom Kamerasystem erzeugt bzw. erfasst worden sind. Das ermöglicht dem Maschinenführer beispielsweise ein erweitertes Blickfeld.

Die DE 10 2022 108 925 A1 und die DE 10 2022 108 899 A1 beschreiben Spiegelersatzsysteme mit Visualisierungseinrichtungen und Kamerasystemen für landwirtschaftliche Arbeitsmaschinen. Die DE 10 2022 105 594 A1 beschreibt eine Arbeitsmaschine mit einem Kamerasystem, einem Visualisierungssystem und einer mit dem Visualisierungssystem verbundener Steuerungseinrichtung, wobei die Steuerungseinrichtung dazu eingerichtet ist, das Visualisierungssystem derart anzusteuern, dass für einen jeweils ausgewählten Arbeitsprozess relevante Informationen visualisiert werden.

Die vorbekannten Anwendungen eines Kamerasystems und einer Visualisierungseinrichtung bei landwirtschaftlichen Arbeitsmaschinen sind verbesserungsbedürftig hinsichtlich Übersichtlichkeit und Informationsgehalt der dargestellten Inhalte.

Es ist eine Aufgabe der Erfindung, eine verbesserte, insbesondere detaillierte und gleichwohl übersichtliche, Informiertheit eines Maschinenführers einer landwirtschaftlichen Arbeitsmaschine zu ermöglichen. Insbesondere ist es eine Aufgabe, die Nachteile des Standes der Technik zu vermeiden. Insbesondere soll eine hinsichtlich Effizienz und Ergonomie verbesserte Arbeitsmaschine sowie ein entsprechend verbessertes Verfahren zum Betrieb vorgeschlagen werden.

Die Aufgabe wird erfindungsgemäß durch die Merkmale der unabhängigen Ansprüche gelöst.

Vorgeschlagen wird eine landwirtschaftliche Arbeitsmaschine mit einer zum Anzeigen von Bilddaten und Prozessdaten eingerichteten Visualisierungseinrichtung. Die landwirtschaftliche Arbeitsmaschine ist vorzugsweise ein Mähdrescher oder ein Feldhäcksler. Die landwirtschaftliche Arbeitsmaschine weist eine Überwachungseinrichtung mit einem Kamerasystem, insbesondere zumindest einem Kamerasystem oder mehreren Kamerasystemen, zum Erfassen von Sichtbereichen im Umfeld der Arbeitsmaschine, ein Reinigungssystem zum Reinigen des Kamerasystems und eine Datenverarbeitungseinheit auf. Die Datenverarbeitungseinheit ist zur Generierung von kontextrelevanten Prozessdaten der Arbeitsmaschine und Bilddaten jeweils auf Grundlage von den erfassten Sichtbereichen eingerichtet. Kameras des Kamerasystems sind an wenigstens einer Tragstruktur der Arbeitsmaschine und mit fester räumlicher Zuordnung zueinander befestigt vorgesehen.

Anders gesagt, beispielsweise, wird ein fahrbares Arbeitsgerät für landwirtschaftliche Zwecke wie ein Mähdrescher oder Feldhäcksler vorgeschlagen, das einen Computer, mehrere Kameras, zumindest eine Anzeige zum Anzeigen von Inhalten und ein Reinigungsgerät für die Kameras aufweist. Die Kameras können Teile des Umfelds des Arbeitsgeräts erfassen. Der Computer kann auf Grundlage von mittels der Kameras erfassten Teilen des Umfelds spezifische Inhalte erzeugen, beispielsweise berechnen bzw. generieren, wobei die spezifischen Inhalte als Bilddaten einerseits eine Bildübertragung vom Umfeld betreffen und andererseits als Prozessdaten den Nutzungskontext des Arbeitsgeräts betreffen, beispielsweise eine quantitative oder qualitative Parametrierung vom Umfeld hinsichtlich einer Ernte. Die Kameras können an dem Arbeitsgerät ortsfest zueinander angeordnet bzw. befestigt sein, beispielsweise so dass der von einer Kamera jeweils erfasste Teil des Umfelds geometrisch fixiert zu dem mit einer anderen Kamera erfassten Teil des Umfelds ist.

Die Erfindung schafft zahlreiche Vorteile. Die Erfindung ermöglicht es, Sichtbereiche systematisch zu erfassen und so auszuwerten, dass der Maschinenführer sowohl eine gute Einsicht in die Sichtbereiche hat als auch eine gute Informiertheit über den Arbeitsprozess erfährt. Insbesondere die Verwendung von einzelnen oder mehreren Kameras sowohl für Bilddaten als auch für Prozessdaten stellt eine vorteilhafte Neuerung dar. Es kann eine Anzahl an Kameras reduziert werden. Der Maschinenführer kann Einsicht in die für die Prozessdaten herangezogenen Bilddaten nehmen, beispielsweise um Plausibilität zu prüfen. Der Maschinenführer erhält wertvolle Bild- und Prozessinformationen für eine jeweilige Arbeitsaufgabe bzw. einen jeweiligen Arbeitsprozess. Es ist möglich, die Überwachungseinrichtung sowohl zur Einsichtnahme in das Umfeld, insbesondere als Spiegelersatzsystem, als auch zur Unterstützung bei der Durchführung oder Optimierung des Arbeitsprozesses zu verwenden. Der Maschinenführer kann sich Prozessdaten und Bilddaten in optimaler Auswahl, insbesondere kontextbezogen, anzeigen lassen.

Durch die Fixiertheit der Kameras zueinander kann eine Fehleranfälligkeit dahingehend reduziert werden, dass der Maschinenführer Daten falsch interpretiert oder dass eine Auswertung durch die Datenverarbeitungseinheit fehlerbehaftet erfolgt, beispielsweise weil ein unbeabsichtigtes oder unbemerktes Verstellen von Kameras vermieden wird. Außerdem kann eine notwendige Rechenleistung bzw. ein Speicherbedarf bei der Verarbeitung der von den Kameras ausgehenden Signale reduziert werden, insoweit die Sichtbereiche fixiert zueinander stehen.

Ebenfalls kann sichergestellt werden, dass die von den Kameras erfassten Sichtbereiche und daraus generierten Daten nicht durch Verschmutzungen der Kameras verfälscht werden, weil eine insbesondere automatisierbare und zeitsparende Möglichkeit der Reinigung der Kameras bereitgestellt wird.

Die Arbeitsmaschine ist insbesondere ein landwirtschaftliches Fahrzeug, beispielsweise Traktor, Trecker, Erntemaschine und/oder dergleichen, insbesondere Mähdrescher oder Feldhäcksler. Die Arbeitsmaschine ist vorzugsweise selbstfahrend ausgebildet. Die Arbeitsmaschine weist typischerweise einen Maschinenrahmen und, bevorzugt am Maschinenrahmen festgelegt, insbesondere federnd und/oder dämpfend daran festgelegt, eine Fahrzeugkabine auf.

Die Arbeitsmaschine weist beispielsweise eine oder mehrere Tragstrukturen auf. Tragstrukturen sind insbesondere tragende und/oder starre Teile der Arbeitsmaschine. Die Tragstruktur umfasst beispielsweise eine/die Fahrzeugkabine, ein Kabinendach, ein Verkleidungsteil bzw. eine Außenverkleidung, beispielsweise eine Strohhaube und/oder eine Heckklappe, eine Seitenklappe, eine Überladevorrichtung zum Überladen von Erntegut, ein Fahrwerksteil bzw. eine Fahrwerkskomponente, eine Triebachse, eine Heckachse und/oder Ähnliches. Auch Schutzausrüstung kann zur Tragstruktur gezählt werden, beispielsweise ein Geländer und/oder Handlauf.

Die Überwachungseinrichtung weist das Kamerasystem, insbesondere mehrere Kamerasysteme, auf. Im Fall mehrerer Kamerasysteme weist jedes der Kamerasysteme zumindest eine Kamera, genau eine Kamera oder mehrere Kameras auf oder ist dadurch gebildet. Beispielsweise ist ein einzelnes Kamerasystem von zumindest einer oder von genau einer Kamera oder von mehreren Kameras gebildet oder weist diese auf. Grundsätzlich sind mehrere Kameras vorgesehen, sei es durch ein Kamerasystem mit mehreren Kameras oder durch mehrere Kamerasystem mit jeweils einer Kamera. Ein Kamerasystem kann mittels einer Kamera einen Sichtbereich oder mittels mehrerer Kameras mehrere Sichtbereiche im Umfeld der Arbeitsmaschine erfassen. Als Sichtbereich kann der von einer Kamera bzw. einem Kamerasystem visuell bzw. optisch erfasste Bereich verstanden werden. Ein Sichtbereich ist beispielsweise der Bereich, auf den das jeweilige Kamerasystem bzw. eine einzelne Kamera davon gerichtet ist. Das Umfeld der Arbeitsmaschine bezieht sich auf den an die Arbeitsmaschine angrenzenden Bereich bzw. auf den Bereich, in dem die Arbeitsmaschine sich regelmäßig befindet, beispielsweise ein landwirtschaftlich genutztes Feld, eine Straße oder ein landwirtschaftliches Arbeitsgelände.

Das Kamerasystem kann auch als Anordnung von einer oder mehreren Kameras verstanden werden. Vorzugsweise ist das oder jedes Kamerasystem einer einzelnen Tragstruktur der Arbeitsmaschine zugeordnet. Die feste räumliche Zuordnung der Kameras zueinander bezieht sich insbesondere auf die Kameras an einer einzelnen Tragstruktur und/oder innerhalb einem Kamerasystem. Die feste räumliche Zuordnung der Kameras zueinander kann sich auch über mehrere Tragstrukturen hinweg auf mehrere Kameras und/oder Kamerasystem beziehen. Durch die feste räumliche Zuordnung gelingt es mitunter leichter, mehrere Sichtfelder in den Bilddaten zusammenzufügen bzw. zusammenzustitchen, um eine Umfeldansicht zu schaffen.

Mehrere Kameras bzw. Kamerasysteme können in Bezug auf eine Fahrtrichtung der Arbeitsmaschine im Wesentlichen symmetrisch an der Arbeitsmaschine verteilt angeordnet sein. Beispielsweise können die Kameras/Kamerasysteme quer zur Fahrtrichtung gegenüberliegend angeordnet sein. Beispielsweise kann verstanden werden, dass eine(s) oder mehrere oder alle der Kameras/Kamerasysteme mehrfach vorhanden sind, insbesondere in gegenüberliegenden bzw. in voneinander abgewandten Positionen. Insoweit im Rahmen der vorliegenden Offenbarung von einem bestimmten Kamerasystem bzw. einer bestimmten Kamera die Rede ist, ist es möglich, dass ein baugleiches Kamerasystem bzw. eine baugleiche Kamera an gegenüberliegender Seite der Arbeitsmaschine angeordnet ist.

Das Reinigungssystem ist zum insbesondere automatisierten Reinigen eingerichtet bzw. ausgebildet. Das Reinigungssystem kann beispielsweise durch einen Reinigungsbefehl betätigt werden. Das Reinigungssystem kann das Kamerasystem reinigen. Es können mehrere der Reinigungssysteme vorgesehen sein, beispielsweise je Kamerasystem ein Reinigungssystem. Das Reinigungssystem kann eine oder mehrere Reinigungseinrichtungen aufweisen. Eine einzelne Reinigungseinrichtung kann einer einzelnen Kamera zugeordnet sein.

Die Datenverarbeitungseinheit ist insbesondere eingerichtet, um Daten auf Grundlage von den erfassten Sichtbereichen zu generieren. Die Daten können auch als insbesondere anzuzeigende bzw. anzeigbare Inhalte verstanden werden. Unter "Daten" können die Prozessdaten und/oder die Bilddaten verstanden werden. Die Datenverarbeitungseinheit ist vorschlagsgemäß zur Generierung von Prozessdaten und Bilddaten eingerichtet, und dies jeweils auf Grundlage von den erfassten Sichtbereichen bzw. unter insbesondere datenverarbeitender Einbeziehung der erfassten Sichtbereiche.

Die Prozessdaten sind kontextrelevant in Bezug auf die Arbeitsmaschine, beispielsweise mit Blick auf einen derzeit durchgeführten Arbeitsprozess der Arbeitsmaschine, beispielsweise einen "Ernteprozess" oder ein "Dreschen". Die Prozessdaten können sich auf einen jeweiligen Nutzungskontext der Arbeitsmaschine beziehen. Die Prozessdaten können objektive Informationen über die Arbeitsmaschine bzw. einen Arbeitsprozess aufweisen, beispielsweise einen Gutfluss, einen Füllstand eines Tanks für Erntegut, beispielsweise an einem Transportfahrzeug oder an der Arbeitsmaschine selbst, oder dergleichen.

Beispielsweise ist es denkbar, dass der Maschinenführer bei einer Arbeitsmaschine einen bestimmten Arbeitsprozess, beispielsweise bei einem Mähdrescher "Dreschen", auswählt, wobei die Prozessdaten für diesen Arbeitsprozess relevant sind. Es kann vorzugsweise zusätzlich ein Kontext des jeweiligen Arbeitsprozesses manuell oder automatisch ausgewählt werden, beispielsweise beim "Dreschen" ein Schneidwerk, wobei das Visualisierungssystem die für den jeweiligen Arbeitsprozess relevanten Prozessdaten und insbesondere in Bezug auf den jeweiligen Kontext visualisieren kann. Dies kann beispielsweise einen Gutfluss von Erntegut in dem Schneidwerk und/oder entsprechende Daten hinsichtlich des aktuellen Durchsatzes und dergleichen betreffen. Andere Prozessdaten, die denselben Arbeitsprozess betreffen können, jedoch im Wesentlichen einen anderen Kontext betreffen, beispielsweise einen Betrieb einer Drescheinrichtung und/oder einer Trenneinrichtung, werden beispielsweise gar nicht oder reduziert visualisiert. Für den Maschinenführer ist es auf diese Weise besonders einfach, je nach Interessenlage sowie gegebenenfalls Notwendigkeit gezielt die Prozessdaten visualisieren zu lassen, die für eine aktuelle Situation von Bedeutung sind. Hierdurch ist die Bedienung der Arbeitsmaschine zusätzlich vereinfacht.

Die Bilddaten sind beispielsweise Visualisierungen des Umfelds, in einem einfachen Fall Kamerabilder. Beispielsweise beinhalten die Bilddaten Bild- und/oder Videoübertragungen aus dem Umfeld. Die Bilddaten können sich auf das Umfeld der Arbeitsmaschine beziehen, insbesondere in dem die Arbeitsmaschine unterwegs ist bzw. fährt. Die Bilddaten können visuellen Einblick verschaffen und/oder eine Wiedergabe des Umfelds beinhalten. Die Bilddaten können sich alternativ oder ergänzend, insbesondere mittelbar oder unmittelbar, auf einen Arbeitsprozess der Arbeitsmaschine beziehen, beispielsweise einen Einblick in Bestandteile und/oder Arbeitsbereiche der Arbeitsmaschine geben, insbesondere Einblick in ein Erntevorsatzgerät, eine Drescheinrichtung, eine Trenneinrichtung, ein Schneidwerk und/oder dergleichen geben. Ein von der Visualisierungseinrichtung empfangbares Videosignal kann die Bilddaten und/oder die Prozessdaten bereitstellen. Beispielsweise sind die Prozessdaten lesbare und/oder quantitative Einblendungen in den Bilddaten.

Die insbesondere von der Datenverarbeitungseinheit generierten Daten können anzuzeigende oder zumindest anzeigbare Daten bzw. Inhalte sein, beispielsweise ein/das Videosignal, das Bilddaten und/oder Prozessdaten umfasst. Die Datenverarbeitungseinheit kann zur Bildauswertung und -verarbeitung ausgebildet sein, um die Daten zu generieren. Die Datenverarbeitungseinheit kann einen zur Datenverarbeitung eingerichteten Computer bzw. ein solches Steuergerät aufweisen. Die Datenverarbeitungseinheit ist beispielsweise an das Kamerasystem bzw. die Kameras angeschlossen, um von diesen Daten erhalten zu können. Es ist möglich, dass das Kamerasystem, die Kameras und/oder die Datenverarbeitungseinheit an ein Bus-System der Arbeitsmaschine angeschlossen sind. Es ist möglich, dass das Kamerasystem bzw. die Kameras und die Datenverarbeitungseinheit zur kabelgebundenen und/oder kabellosen Kommunikation miteinander ausgebildet sind, vorzugsweise zumindest unidirektional hin zur Datenverarbeitungseinheit, bevorzugt bidirektional.

Die Kameras des Kamerasystems bzw. der Kamerasysteme sind an wenigstens einer Tragstruktur der Arbeitsmaschine befestigt. Zwei oder mehr oder alle der Kamerasysteme sind zudem mit fester räumlicher Zuordnung zueinander befestigt. Insbesondere weisen die jeweiligen Kameras bzw. Kamerasysteme in Richtungen, die ortsfest bzw. fixiert zueinander angeordnet sind. Beispielsweise weist ein Kamerasystem bzw. dessen Kamera(s) weist/weisen im Wesentlichen in Fahrtrichtung und ein anderes Kamerasystem bzw. dessen Kamera(s) weist/weisen im Wesentlichen quer zur Fahrtrichtung oder entgegengesetzt zur Fahrtrichtung. Das ermöglicht vorteilhaft, dass die von den jeweiligen Kamerasystemen bzw. Kameras erhaltenen Bilddaten in einem festen geometrischen Verhältnis zueinander stehen, so dass diese unter geringem Rechenaufwand verarbeitet werden können und ebenfalls vom Maschinenführer recht intuitiv verstanden werden können.

Die Visualisierungseinrichtung ist zum Anzeigen von Bilddaten und Prozessdaten eingerichtet bzw. kann Bilddaten und/oder Prozessdaten anzeigen. Beispielsweise kann eine Videoübertragung bzw. ein Videosignal, insbesondere die Bilddaten, vom Kamerasystem bzw. von den Kameras dargestellt werden. Die Visualisierungseinrichtung weist beispielsweise eine Visualisierungseinheit oder mehrere davon auf. Die Visualisierungseinrichtung kann eine Steuereinheit aufweisen, die mit der oder mit allen Visualisierungseinheiten datenmäßig verbunden ist, beispielsweise um Daten bzw. die Bilddaten und/oder Prozessdaten zu übermitteln und/oder um Eingaben und/oder Messwerte, beispielsweise von der bzw. den Visualisierungseinheiten, zu empfangen. Die Steuereinheit kann mit der Datenverarbeitungseinheit und/oder einer Arbeitsmaschinen-Steuereinheit datenmäßig verbunden sein, beispielsweise um von dieser Daten zu empfangen und/oder um an diese Daten zu übermitteln. Die Steuereinheit kann alternativ oder ergänzend von der Datenverarbeitungseinheit bereitgestellt sein.

Die Visualisierungseinrichtung, insbesondere die Visualisierungseinheit, kann zum Anzeigen von Bilddaten und/oder Prozessdaten ein Display, beispielsweise LC-Display (LCD) oder LED-Display, insbesondere OLED-Display, aufweisen. Das Display weist vorzugsweise eine Hintergrundbeleuchtung auf, um auch bei Dunkelheit ablesbar zu sein. Jede Visualisierungseinheit weist normalerweise genau ein Display auf, das beispielsweise im Wesentlichen viereckig bzw. rechteckig in dem Bereich geformt ist, der die Inhalte anzeigen kann. Einzelne Visualisierungseinheiten können auch aus mehreren Displays bestehen, beispielsweise indem die Displays sehr nahe beieinander angeordnet sind. Denkbar ist auch, dass mehrere Displays einer Visualisierungseinheit einen Abstand zueinander aufweisen. So könnten mehrere Displays an einer Tragstruktur wie einer A- bzw. B-Säule angeordnet sein, beispielsweise übereinander.

Vorzugsweise ist die Datenverarbeitungseinheit eingerichtet, numerische Prozessdaten zu generieren, die zur quantitativen Erfassung eines im Nutzungskontext der Arbeitsmaschine durchgeführten Arbeitsprozesses dienen. Die Datenverarbeitungseinheit kann die Prozessdaten durch Auswertung von Daten bzw. einem Signal von dem Kamerasystem generieren. Zu den Prozessdaten gehören beispielsweise eine Bestandshöhe von Erntegut und/oder im Fall von Getreide als Erntegut eine Ährenzählung bzw. eine Zählung der Ähren insbesondere pro Flächeneinheit oder auch eine Dichte des Getreides. Es ist auch möglich, dass die Prozessdaten sich auf Lagergetreide beziehen. Lagergetreide ist umgefallenes bzw. umgeknicktes Getreide. Insoweit kann das Lagergetreide mittels der Prozessdaten lokalisiert und/oder gezählt werden. Auch ist es denkbar, dass die Prozessdaten den Gutfluss von Erntegut als Zahlenwert angeben können. Beispielsweise beinhalten die Prozessdaten eine Information darüber, ob Anomalien im Arbeitsprozess auftreten. Die Prozessdaten können sich beispielsweise darauf beziehen bzw. eine entsprechende Information bereitstellen, ob Erdreich bzw. Erde hinter einem Erntevorsatzgerät und/oder einem Schneidwerk aufgeschoben wird. Die numerischen Prozessdaten können als reine Zahlenwert(e) und/oder als graphische Darstellungen, beispielsweise als Diagramme oder dergleichen, generiert und insbesondere angezeigt werden.

Vorzugsweise ist die Datenverarbeitungseinheit eingerichtet, Bilddaten für die Visualisierungseinrichtung als ein Spiegelersatzsystem bereitzustellen, insbesondere wobei die Bilddaten Ausschnitte, Zusammenschnitte und/oder perspektivisch korrigierte Darstellungen der Sichtbereiche umfassen. Insoweit können mittels der Visualisierungseinrichtung angezeigte Daten bzw. Bilddaten einen physikalischen Rückspiegel ersetzen. Die Anzeige erfolgt typischerweise mit einer oder mehreren vorderen Visualisierungseinheiten, beispielsweise an der A-Säule. Beispielsweise kann ein in Fahrtrichtung rückwärtig zur Arbeitsmaschine gelegener Sichtbereich im Blickfeld eines Maschinenführers angezeigt werden, wobei der Maschinenführer typischerweise im Wesentlichen in Fahrtrichtung blickt. Es kann ein Spurbild der Arbeitsmaschine eingeblendet werden, um den Fahrweg zu erahnen, und zwar insbesondere dynamisch in Abhängigkeit von einem Lenkwinkel und/oder statisch. Das Spurbild kann sich auf eine Anhängeöse der Arbeitsmaschine beziehen. Das Spiegelersatzsystem verbessert die Einsehbarkeit um die Arbeitsmaschine nach Art eines Weitwinkelspiegels. Es kann auf einen, mehrere oder alle physikalische(n) Spiegel verzichtet werden. Das Spiegelersatzsystem kann derart ausgebildet sein, dass es den gesetzlichen Anforderungen für die Nutzung im Straßenverkehr entspricht, um auf physikalische Spiegel verzichten zu können. Die gesetzlichen Anforderungen sind dem Fachmann bekannt bzw. recherchierbar. Insbesondere muss das Spiegelersatzsystem hierzu einen dauerhaften Einblick ins Umfeld verschaffen können bzw. dauerhaft bereitgestellt sein.

Vorzugsweise ist die Datenverarbeitungseinheit eingerichtet, Bilddaten bereitzustellen, die Tragstrukturen, Teile und/oder Abschnitte der Arbeitsmaschine zumindest abschnittsweise unsichtbar erscheinen lassen, wenn die Bilddaten im Blickfeld eines Maschinenführers mittels der Visualisierungseinrichtung angezeigt werden. Mit anderen Worten, beispielsweise, wird vorgeschlagen, dass ein Videosignal derart erzeugbar und mittels der Visualisierungseinrichtung anzeigbar ist, dass das angezeigte Videosignal die Visualisierungseinrichtung bzw. -einheit als Schaufenster erscheinen lassen kann. Insbesondere liegt der den angezeigten Bilddaten zugrundeliegende Sichtbereich mit Vorteil hintergründig zur jeweiligen Visualisierungseinheit. Dies schafft ein größeres Blickfeld des Maschinenführers, was auch die Sicherheit steigern kann, weil Gefahrensituationen schneller erkannt werden können. Auch ein Blick nach oben oder nach unten durch Tragstrukturen hindurch, die mit einer Visualisierungseinheit versehen sein können, ist möglich. Beispielsweise kann zumindest ein Kamerasystem und/oder zumindest eine Kamera zum Generieren der hierzu verwendbaren Bilddaten herangezogen werden. Die entsprechende Visualisierungseinrichtung kann beispielsweise zum Maschinenführer zugewandt in der Fahrzeugkabine angeordnet sein, beispielsweise an der A-Säule.

Vorzugsweise ist die Datenverarbeitungseinheit zum Betreiben in verschiedenen Betriebsmodi eingerichtet. Die Betriebsmodi können einen Straßen-Betriebsmodus und einen Arbeits-Betriebsmodus umfassen. Es können auch mehr als zwei Betriebsmodi vorgesehen sein, beispielsweise mehrere Arbeits-Betriebsmodi, die individuell kontextbezogen sind. Insbesondere ist vorgesehen, dass im Straßen-Betriebsmodus dauerhaft ein oder das Spiegelersatzsystem bereitgestellt wird bzw. bereitstellbar ist. Beispielsweise können im Straßen-Betriebsmodus überwiegend oder zumindest fast ausschließlich Bilddaten angezeigt werden. Beispielsweise kann ein physikalischer und/oder computerimplementierter Schalter oder Taster vorgesehen sein, der durch eine Nutzerinteraktion vom Maschinenführer betätigbar ist, um einen Betriebsmodus auszuwählen. Beispielsweise kann das Spiegelersatzsystem im Arbeits-Betriebsmodus nur optional bereitgestellt werden und im Straßen-Betriebsmodus dauerhaft bzw. zwangsweise bereitgestellt werden. Es ist möglich, dass die Arbeitsmaschine derart eingerichtet ist, dass der Straßen-Betriebsmodus in Abhängigkeit von einem Betriebsumfeld und/oder einem Standort automatisch eingeschaltet wird. Beispielsweise kann der Straßen-Betriebsmodus bei jeder Inbetriebnahme der Arbeitsmaschine vorausgewählt sein, um bedarfsweise manuell abgewählt zu werden. Der Straßen-Betriebsmodus kann die Sicherheit erhöhen, indem beispielsweise die Einsichtnahme des Maschinenführers in das Umfeld verbessert wird. Außerdem wird die Ergonomie verbessert.

Vorzugsweise ist die Datenverarbeitungseinheit eingerichtet, Bilddaten bereitzustellen, die eine aus zumindest zwei bzw. mehreren der Sichtbereichen zusammengesetzte Umfeldansicht für einen Maschinenführer ermöglichen. Beispielsweise kann auch bei dem Spiegelersatzsystem vorgesehen sein, dass zumindest zwei bzw. mehrere der Sichtbereiche zusammengesetzt sind. Die Umfeldansicht kann dadurch bereitgestellt werden, dass die Sichtbereiche des Kamerasystems, mehrerer Kamerasysteme oder mehrerer Kameras zusammengestitcht werden, so dass in den Bilddaten die mehreren Sichtbereiche als ein größerer Sichtbereich abgebildet wird. Beispielsweise ist es möglich, dass die Bilddaten eine Synthese aus Sichtbereichen schaffen, die sich überlappen, und die zusammen eine Sichtfeldbreite von mehr als 90°, vorzugsweise mehr als 120°, weiter vorzugsweise mehr als 150°, insbesondere mehr als 170° oder mehr als 180° abdecken. Damit kann ein großes Umfeld erfasst werden und als Bilddaten nutzerfreundlich bzw. leicht verständlich angezeigt werden. Es ist damit möglich, darauf zu verzichten, mehrere der Sichtbereiche separat voneinander anzuzeigen bzw. auf der Visualisierungseinrichtung wiederzugeben.

Vorzugsweise ist die Datenverarbeitungseinheit und/oder die Visualisierungseinrichtung eingerichtet, Prozessdaten und Bilddaten in Abhängigkeit von einem durchgeführten Arbeitsprozess der Arbeitsmaschine, eines Nutzerbefehls, einer Schalterstellung und/oder eines vorliegenden Betriebsmodus der Datenverarbeitungseinheit bereitzustellen bzw. anzuzeigen. Vorzugsweise ist die Datenverarbeitungseinheit und/oder die Visualisierungseinrichtung eingerichtet, die Bilddaten und/oder die Prozessdaten aufgrund des Nutzerbefehls und/oder der Schalterstellung zu verändern und/oder auszuwählen. Grundsätzlich ist gedacht, dass die Datenverarbeitungseinheit die Prozessdaten und die Bilddaten adaptiv bezüglich des Arbeitsprozesses oder auch bezüglich etwaiger Nutzerbefehle bzw. Schalterbetätigungen generiert bzw. auswählt. Alternativ oder ergänzend kann die Visualisierungseinrichtung entsprechend adaptiv die Prozessdaten und/oder Bilddaten anzeigen, anpassen und/oder auswählen. Beispielsweise kann je nach Arbeitsprozess das Verhältnis aus Prozessdaten zu Bilddaten und/oder jeweils deren Inhalt angepasst werden. Der Maschinenführer kann durch individuelle Auswahl Einfluss auf die angezeigten Prozessdaten und/oder die Bilddaten nehmen. Insbesondere kann der Maschinenführer die angezeigten Daten beeinflussen, beispielsweise direkt durch den Nutzerbefehl bzw. die Schalterstellung und/oder indirekt durch die Auswahl eines Arbeitsprozesses und insbesondere eines diesbezüglichen Kontexts.

Vorzugsweise weist die Arbeitsmaschine einen Arm zur Befestigung in einer Außenspiegelposition der Arbeitsmaschine auf. An dem Arm ist insbesondere zumindest ein Kamerasystem bzw. das Kamerasystem festgelegt. Vorzugsweise ist eines von mehreren Kamerasystemen, beispielsweise ein erstes Kamerasystem, teilweise oder vollständig an dem Arm festgelegt. Der Arm ist insbesondere zumindest im Wesentlichen langgestreckt. Der Arm kann ein Gelenk aufweisen, beispielsweise um den Arm einzuklappen. Es können zwei der Arme vorgesehen sein, beispielsweise je Seite der Arbeitsmaschine ein Arm, insbesondere ein linksseitiger und ein rechtsseitiger Arm. Je Arm kann ein Kamerasystem, insbesondere das erste Kamerasystem, vorgesehen sein. Der Arm kann einen jeweiligen Außenspiegel teilweise oder ganz ersetzen, um anstelle eines Außenspiegels oder ergänzend zum Außenspiegel das jeweilige Kamerasystem in der Außenspiegelposition zu halten. Die Außenspiegelposition ist insbesondere eine von der Fahrzeugkabine seitlich zur Fahrtrichtung gelegene und/oder von der Fahrzeugkabine exponierte Lage. Der Arm kann von der Fahrzeugkabine auskragend ausgebildet sein. Ausgehend von dem Arm kann ein daran festgelegtes Kamerasystem eine Vielzahl an Sichtbereichen erfassen, beispielsweise vor, neben und hinter der Arbeitsmaschine, und beispielsweise im Bereich um das Vorsatzgerät. Mittels des Arms wird eine gute Grundlage geschaffen, das Spiegelersatzsystem bzw. Bilddaten und ggf. Prozessdaten bereitzustellen.

Das Kamerasystem, insbesondere das erste Kamerasystem, ein zweites Kamerasystem und/oder ein drittes Kamerasystem, kann eine erste Kamera, vorzugsweise eine zweite Kamera, weiter vorzugsweise eine dritte Kamera, optional eine vierte Kamera, usw. umfassen. Es können jeweils auch mehrere von der ersten, der zweiten, der dritten und/oder der vierten Kamera vorgesehen sein. Entsprechend können andere/weitere Kamerasysteme der Kamerasysteme ausgestaltet sein, beispielsweise zwei oder mehr Kameras oder jeweils mehrere davon umfassen.

Die erste Kamera, insbesondere des ersten Kamerasystems, kann im Wesentlichen entgegen einer Fahrtrichtung weisen. Beispielsweise weist die erste Kamera in eine im Wesentlichen horizontale Richtung und dies bevorzugt entgegen der Fahrtrichtung. Die erste Kamera ist insbesondere zum Erfassen eines in Fahrtrichtung im Wesentlichen rückwärtig zur Arbeitsmaschine gelegenen Sichtbereichs vorgesehen, und zwar insbesondere zur Generierung von den Bilddaten und optional den Prozessdaten. Die erste Kamera kann beispielsweise zur Bereitstellung des Spiegelersatzsystems herangezogen werden. Die erste Kamera kann beispielsweise eine Videoübertragung vom rückwärtigen Umfeld der Arbeitsmaschine liefern. Es können auf Grundlage des Sichtbereichs der ersten Kamera auch kontextrelevante Prozessdaten generiert werden. Optional können zwei von der ersten Kamera vorgesehen sein. Eine der Kameras kann als Tele-Außenspiegelkamera und eine andere Kamera kann als Weitwinkel-Außenspiegelkamera ausgebildet sein. Die erste Kamera kann insoweit insbesondere als Spiegelersatz-Kamera, d.h. spiegelersatzsystembezogene Kamera, und optional als Prozess-Kamera, d.h. arbeitsprozessbezogene Kamera, dienen.

Die zweite Kamera, insbesondere des ersten Kamerasystems, kann im Wesentlichen zum Boden weisen und/oder im Wesentlichen vertikal ausgerichtet sein. Die zweite Kamera ist insbesondere zum Erfassen eines in einem Nahbereich um die Arbeitsmaschine gelegenen und/oder ein Erntevorsatzgerät zumindest abschnittsweise enthaltenden Sichtbereichs vorgesehen, und zwar insbesondere zur Generierung von den Bilddaten und/oder den Prozessdaten. Der Sichtbereich kann sich in unmittelbarer Nähe der Arbeitsmaschine befinden. Der Sichtbereich kann das Erntevorsatzgerät umfassen, beispielsweise um in Fahrtrichtung unmittelbar vor oder hinter dem Erntevorsatzgerät Einblick zu erhalten, um daraus Bilddaten und/oder Prozessdaten zu generieren. Die zweite Kamera kann insoweit insbesondere als Prozess-Kamera und/oder als Spiegelersatz-Kamera dienen.

Die dritte Kamera, insbesondere des ersten Kamerasystems, kann im Wesentlichen in Fahrtrichtung und/oder zum Boden weisen. Beispielsweise weist die dritte Kamera in eine Richtung im Bereich zwischen einer horizontalen Richtung und einer vertikalen Richtung, vorzugsweise schräg. Die dritte Kamera ist insbesondere zum Erfassen eines in Fahrtrichtung im Wesentlichen vorderseitig zu einem/dem Erntevorsatzgerät gelegenen und das Erntevorsatzgerät zumindest abschnittsweise enthaltenden Sichtbereichs vorgesehen, und zwar insbesondere zur Generierung von den Prozessdaten. Die dritte Kamera kann insoweit insbesondere als Prozess-Kamera verstanden werden.

Ein Kamerasystem, insbesondere das erste Kamerasystem, kann zum Schwenken eingerichtet sein. Insbesondere kann der Arm das Kamerasystem bzw. dessen Kamera(s) eine Möglichkeit zum Schwenken bereitstellen. Insbesondere ist das erste Kamerasystem mittels des Arms zum Schwenken um eine bevorzugt zumindest im Wesentlichen vertikale Schwenkachse eingerichtet. Entsprechend kann die Kamera bzw. es können die Kameras des ersten Kamerasystems über den Arm um die Schwenkachse geschwenkt werden.

Vorzugsweise weist der Arm zur schwenkbaren Befestigung des jeweiligen bzw. des ersten Kamerasystems ein Schwenkteil und ein Halteteil auf. Das Halteteil ist vorzugsweise seitens der Arbeitsmaschine vorgesehen bzw. daran befestigt. Das Schwenkteil kann ein freies Ende des Arms bilden und/oder abgewandt von der Arbeitsmaschine angeordnet sein. Beispielsweise ist das Schwenkteil schwenkbar, vorzugsweise um eine zumindest im Wesentlichen vertikale Schwenkachse, an dem Halteteil festgelegt. Das Schwenkteil ist vorzugsweise überlastgeschützt um die Schwenkachse an dem Halteteil festgelegt. Ein Überlastschutz kann beispielsweise durch ein federbelastetes Nockenpaket gebildet sein. Insbesondere kann das Schwenkteil grundsätzlich fixiert zum Halteteil angeordnet sein, jedoch bei zu hoher Krafteinwirkung um die Schwenkachse den Überlastschutz überwinden und sich verschwenken. Das Schwenkteil kann motorisch schwenkbar und/oder motorisch rückstellbar am Halteteil festgelegt sein. Beispielsweise wenn das Schwenkteil manuell und unter Überwindung des Überlastschutzes verschwenkt worden ist, dann kann es motorisch zurückgestellt werden. Die motorische Verstellung kommt auch dazu infrage, um einen erfassten Sichtbereich zu ändern. Die Schwenkbarkeit vermeidet insbesondere Schäden bei Kollisionen, vermeidet Kollisionen und vereinfacht eine Verladung der Arbeitsmaschine.

Es ist möglich, dass das Kamerasystem, insbesondere das erste Kamerasystem, und vorzugsweise das Reinigungssystem zumindest teilweise in dem Schwenkteil verbaut sind. Beispielsweise weist das Schwenkteil einen Rahmen zur Befestigung von Kameras und optional dem Reinigungssystem bzw. einzelnen Reinigungseinrichtungen auf. Das Schwenkteil kann einen insbesondere in Fahrtrichtung vorgelagerten Schild aufweisen. Der Schild kann einen mechanischen Schutz bei Kollisionen bereitstellen. Das Schwenkteil kann eine Abschattung gegen Sonnenlicht für das erste Kamerasystem aufweisen. Die Abschattung kann durch einen insbesondere verstellbaren Schirm gebildet sein, der Lichteinfall von im Wesentlichen oberhalb des Horizonts abschatten kann.

Das Kamerasystem, insbesondere das zweite Kamerasystem oder ein anderes/weiteres Kamerasystem, kann an einem/dem Kabinendach angeordnet sein und/oder darin integriert sein, insbesondere zumindest teilweise. Das zweite Kamerasystem kann zum Erfassen eines in Fahrtrichtung im Wesentlichen vorderseitig zu einem/dem Erntevorsatzgerät gelegenen und/oder ein/das Erntevorsatzgerät zumindest abschnittsweise enthaltenden Sichtbereichs eingerichtet sein. Der Sichtbereich kann sich in unmittelbarer Nähe der Arbeitsmaschine befinden. Der Sichtbereich kann das Erntevorsatzgerät umfassen, beispielsweise um in Fahrtrichtung unmittelbar vor dem Erntevorsatzgerät Einblick zu erhalten, um daraus Bilddaten und/oder Prozessdaten zu generieren. Das zweite Kamerasystem bzw. dessen Kamera kann insoweit insbesondere als Prozess-Kamera und/oder als Spiegelersatz-Kamera dienen.

Das zweite Kamerasystem kann zwei benachbarte Kameras aufweisen. Die optischen Achsen der zwei benachbarten Kameras können schräg zueinander angeordnet sein und/oder sich kreuzen, insbesondere sich längs der Fahrtrichtung vor den zwei benachbarten Kameras kreuzen. Damit ist gemeint, dass die zwei benachbarten Kameras im Grunde gegenüberliegend angeordnet bzw. einander zugewandt sind, und dabei aneinander vorbei schauend ausgerichtet sind. Die Sichtbereiche und/oder die optischen Achsen können sich, beispielsweise in einer Draufsicht auf die Arbeitsmaschine, überschneiden, insbesondere im Bereich einer Mitte der Arbeitsmaschine. Beispielsweise weist eine in Fahrtrichtung linksseitige Kamera nach rechts und eine in Fahrtrichtung rechtsseitige Kamera nach links, damit sich die optischen Achsen in Fahrtrichtung vor den Kameras und bevorzugt zumindest in der Draufsicht kreuzen bzw. schneiden. Damit wird ein gegenüber vorbekannten Lösungen kompakterer Aufbau geschaffen. Beispielsweise kann der Abschnitt der Arbeitsmaschine, der das zweite Kamerasystem enthält, kompakter ausgestaltet werden. Gerade im Kabinendach bei mäßigem Raumangebot ist das besonders vorteilhaft.

Das Kamerasystem, insbesondere das dritte Kamerasystem oder ein anderes/weiteres Kamerasystem, kann zur Anordnung an der Tragstruktur oder einer anderen/weiteren Tragstruktur vorgesehen sein bzw. daran angeordnet sein, beispielsweise an der Fahrzeugkabine, dem Kabinendach, dem Verkleidungsteil, der Strohhaube und/oder der Seitenklappe. Das dritte Kamerasystem ist insbesondere zum Erfassen eines weiteren Sichtbereichs eingerichtet, vorzugsweise zur Generierung von eine Vogelperspektive enthaltenden Bilddaten. Das dritte Kamerasystem kann an verschiedenen Tragstrukturen verteilt angeordnet sein, um eine weitere Grundlage für Bilddaten oder auch Prozessdaten zu liefern. Das dritte Kamerasystem ist vorwiegend als Spiegelersatz-Kamera, optional als Prozess-Kamera vorgesehen. Beispielsweise kann mittels des dritten Kamerasystems ein Sichtbereich mit Einsichtnahme seitlich von der Arbeitsmaschine und/oder hinter der Arbeitsmaschine bereitgestellt werden.

Das Kamerasystem, insbesondere das dritte Kamerasystem oder ein anderes/weiteres Kamerasystem, kann zwei gegenüberliegend angeordnete Kameras aufweisen. Die zwei Kameras können in im Wesentlichen voneinander abgewandte Richtungen weisend angeordnet sein. Beispielsweise können so spiegelsymmetrische Sichtbereiche in Bezug auf eine Mitte der Arbeitsmaschine abgedeckt werden. Beispielsweise befindet sich eine der Kameras auf der linken Seite der Arbeitsmaschine und die andere Kamera auf der rechten Seite der Arbeitsmaschine.

Das Kamerasystem, insbesondere das vierte Kamerasystem oder ein anderes/weiteres Kamerasystem, kann zur Anordnung an der Tragstruktur oder einer weiteren/anderen Tragstruktur vorgesehen sein bzw. daran angeordnet sein, beispielsweise an der Überladevorrichtung, insbesondere an einem freien Ende der Überladevorrichtung. Insbesondere ist das vierte Kamerasystem zur Erfassung eines Zielbereichs von zu überladendem Erntegut als ein Sichtbereich vorgesehen. Das vierte Kamerasystem bezieht sich insbesondere auf eine Perspektive, die von der Überladevorrichtung ausgeht, um eine weitere Grundlage für Bilddaten oder auch Prozessdaten zu liefern. Beispielsweise kann mittels des vierten Kamerasystems ein Sichtbereich mit Einsichtnahme in einen Zielbereich erfolgen, den zu überladendes Erntegut treffen soll.

Das Kamerasystem, insbesondere das fünfte Kamerasystem oder ein anderes/weiteres Kamerasystem, kann zur Anordnung an der Tragstruktur oder einer weiteren/anderen Tragstruktur vorgesehen sein, beispielsweise an einer Achse der Arbeitsmaschine, insbesondere zwischen Erntevorsatzgerät und Heckachse bzw. Triebachse und/oder an der Heckachse bzw. Triebachse. Insbesondere ist das fünfte Kamerasystem zum Erfassen eines zwischen einer Achse bzw. der Heckachse und dem Erntevorsatzgerät gelegenen und/oder das Erntevorsatzgerät zumindest abschnittsweise enthaltenden Sichtbereichs vorgesehen. Beispielsweise kann ausgehend von der Heckachse eine gute Einsichtnahme in den zum Erntevorsatzgerät in Fahrtrichtung rückwärtig gelegenen Bereich erhalten werden. Der Sichtbereich kann insoweit in Fahrtrichtung zum Erntevorsatzgerät weisen und dessen Rückseite und den Untergrund beinhalten. Beispielsweise befindet sich das fünfte Kamerasystem an der Unterseite der Arbeitsmaschine. Es wird eine Perspektive bereitgestellt, die das Generieren von Prozessdaten oder auch Bilddaten in besonders vorteilhafter Weise ermöglicht und den Betrieb der Arbeitsmaschine erleichtert, beispielsweise Ausfallzeiten durch schnellere Fehlererkennung reduziert.

Das Reinigungssystem kann beispielsweise mittels eines kontaktierenden und/oder eines kontaktfreien Wirkprinzips reinigen. Beispielsweise kann das Reinigungssystem, insbesondere als Teil einer Reinigungseinrichtung, eine Düse, beispielsweise Waschdüse und/oder Druckluftdüse, aufweisen. Die Reinigungseinrichtung bzw. Düse kann zu einer oder mehreren der Kameras und/oder einem oder zu mehreren der Kamerasysteme weisend angeordnet sein. Das Reinigungssystem kann druckluft- und/oder flüssigkeitsbetrieben ausgebildet sein. Vorzugsweise weist das Reinigungssystem eine Düse oder mehrere Düsen zum Ausstoßen von Druckluft und/oder Flüssigkeit insbesondere auf das Kamerasystem oder auf zumindest eines der Kamerasysteme und/oder auf zumindest eine der Kameras auf. Eine Neigung der Düse insbesondere relativ zum jeweiligen Kamerasystem oder zur jeweiligen Kamera ist vorzugsweise einstellbar, beispielsweise motorisch und/oder befehlsgesteuert. Im Fall von mehreren Düsen können je Kamera und/oder je Kamerasystem eine Düse vorgesehen sein. Es kann jedem Kamerasystem oder jeder Kamera ein eigenes Reinigungssystem bzw. eine eigene Reinigungseinrichtung bzw. Düse zugeordnet sein.

Vorgeschlagen wird weiter ein Verfahren zum Betrieb einer bzw. der landwirtschaftlichen Arbeitsmaschine. Bei dem Verfahren ist insbesondere vorgesehen,
dass die Arbeitsmaschine einen Arbeitsprozess durchführt, dass das Kamerasystem insbesondere mittels ortsfest zueinander angeordneten Kameras Sichtbereiche erfasst,
dass kontextrelevante Prozessdaten der Arbeitsmaschine und Bilddaten eines Umfelds der Arbeitsmaschine auf Grundlage von den erfassten Sichtbereichen generiert werden, und
dass die Prozessdaten und die Bilddaten, insbesondere mittels einer Visualisierungseinheit der Arbeitsmaschine, angezeigt werden.

Im Rahmen der Offenbarung steht die Abkürzung "bzw." als Kurzform für "beziehungsweise" und soll alternative, im Grunde gleichwertige und/oder synonyme Merkmale oder Begriffe angeben, um die Idee bzw. den Sinn einer Merkmals- oder Begriffsverwendung näher zu bringen. "Beziehungsweise" kann stets durch "und/oder" ersetzt werden. Weitere vorteilhafte Ausgestaltungen sind Gegenstand weiterer Unteransprüche und werden nachfolgend anhand in mehreren Figuren dargestellter Ausführungsbeispiele beschrieben. Es zeigen:
- Figur 1: perspektivische Darstellungen einer erfindungsgemäßen landwirtschaftlichen Arbeitsmaschine mit verschiedenen Sichtbereiche im Umfeld der Arbeitsmaschine
- Figur 2: Ausgestaltungsvarianten von landwirtschaftlichen Arbeitsmaschinen
- Figur 3: perspektivische Darstellungen eines Arms einer landwirtschaftlichen Arbeitsmaschine
- Figur 4: Ausgestaltungsvarianten von landwirtschaftlichen Arbeitsmaschinen

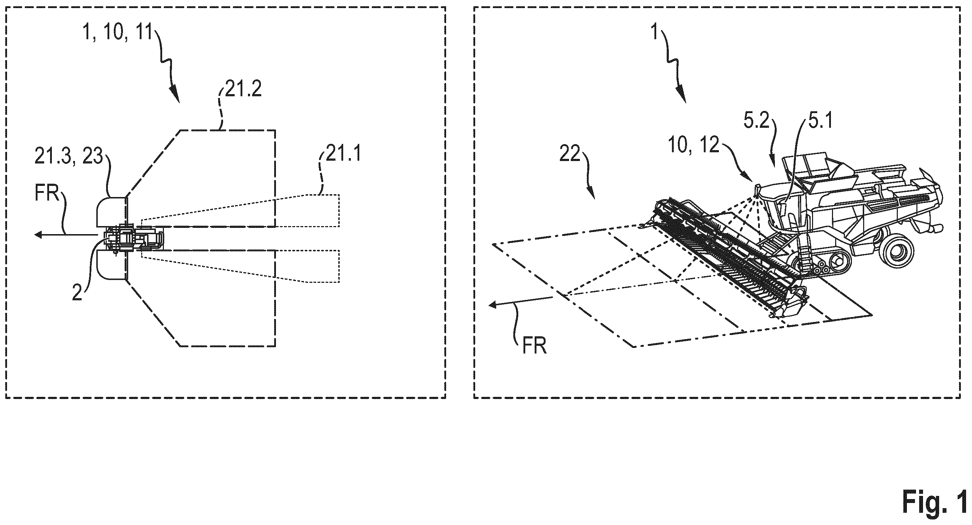

Fig. 1 links zeigt eine landwirtschaftliche Arbeitsmaschine 1 mit einer zum Anzeigen von Daten, insbesondere Bilddaten und Prozessdaten, eingerichteten Visualisierungseinrichtung. Die Arbeitsmaschine 1 kann zur Ernte beispielsweise in eine Fahrtrichtung FR fahren. Die Visualisierungseinrichtung kann einem Maschinenführer die Daten anzeigen. Die Arbeitsmaschine 1 weist eine Überwachungseinrichtung 10 mit mehreren Kamerasystemen 11 auf, die zum Erfassen von Sichtbereichen 21.1, 21.2, 21.3, 23 im Umfeld der Arbeitsmaschine 1 eingerichtet sind. Ferner sind ein Reinigungssystem zum Reinigen der Kamerasysteme 11 und eine Datenverarbeitungseinheit vorgesehen, die nicht detailliert dargestellt sind.

Die Datenverarbeitungseinheit kann kontextrelevante Prozessdaten und Bilddaten jeweils auf Grundlage von den erfassten Sichtbereichen 21.1, 21.2, 21.3, 23 generieren. Die Kamerasysteme 11 bzw. deren Kameras weisen eine feste räumliche Zuordnung zueinander auf und sind an Tragstrukturen der Arbeitsmaschine 1 befestigt. Mittels der Kamerasysteme 11 werden sowohl die Prozessdaten als auch die Bilddaten bereitgestellt, um dem Maschinenführer im Wesentlichen in Echtzeit angezeigt zu werden.

Die Sichtbereiche 21.1, 21.2, 21.3, 23 sind vorliegend zumindest im Wesentlichen symmetrisch in Fahrtrichtung FR rechtsseitig und linksseitig von der Arbeitsmaschine 1 angeordnet.

Der mit Bezugszeichen 21.1 bezeichnete Sichtbereich ist in Fahrtrichtung FR im Wesentlichen rückwärtig zur Arbeitsmaschine 1 gelegen. Dieser Sichtbereich 21.1 bildet im Grunde ein Sichtfeld eines Hauptaußenrückspiegels ab.

Der mit Bezugszeichen 21.2 bezeichnete Sichtbereich ist im Nahbereich um die Arbeitsmaschine 1 gelegen und enthält ein Erntevorsatzgerät 2 der Arbeitsmaschine 1 zumindest abschnittsweise. Dieser Sichtbereich 21.2 ist im Grunde neben und hinter der Arbeitsmaschine 1 angeordnet und bildet ein Sichtfeld eines Weitwinkel-Außenspiegels ab.

Der mit Bezugszeichen 21.3 bezeichnete Sichtbereich ist in Fahrtrichtung FR im Wesentlichen vorderseitig zum Erntevorsatzgerät 2 gelegen und beinhaltet dieses zumindest abschnittsweise. Dieser Sichtbereich 21.3 ist im Grunde neben und vor der Arbeitsmaschine angeordnet und bildet ein Sichtfeld eines Nahbereichs- bzw. Anfahrspiegels ab.

Fig. 1 rechts zeigt eine landwirtschaftliche Arbeitsmaschine 1 in Form eines Mähdreschers. Die Arbeitsmaschine 1 weist ein Erntevorsatzgerät 2 auf, das in Fahrtrichtung FR vorne an der Arbeitsmaschine 1 angeordnet ist. Die Arbeitsmaschine 1 weist eine Überwachungseinrichtung 10 auf, die ein zweites Kamerasystem 12 mit zwei Kameras zum Erfassen von Sichtbereichen 22 im Umfeld der Arbeitsmaschine 1 umfasst. Nicht detailliert dargestellt sind ein Reinigungssystem zum Reinigen des Kamerasystems und eine Datenverarbeitungseinheit. Die Kameras des zweiten Kamerasystems 12 sind mit fester räumlicher Zuordnung zueinander an einem Kabinendach 5.2 befestigt bzw. darin integriert. Die Datenverarbeitungseinheit ist zur Generierung von kontextrelevanten Prozessdaten und Bilddaten jeweils auf Grundlage von den erfassten Sichtbereichen 22 eingerichtet ist. Die Sichtbereiche 22 sind in Fahrtrichtung FR im Wesentlichen vorderseitig zu dem Erntevorsatzgerät 2 gelegen und enthalten das Erntevorsatzgerät 2 zumindest abschnittsweise. Die Arbeitsmaschine 1 weist eine nicht näher gezeigte Visualisierungseinrichtung in einer mit dem Kabinendach 5.2 versehenen Fahrzeugkabine 5.1 auf, die einem Maschinenführer die Prozessdaten und die Bilddaten anzeigen kann. Die Visualisierungseinrichtung weist Visualisierungseinheiten in Form von Displays auf.

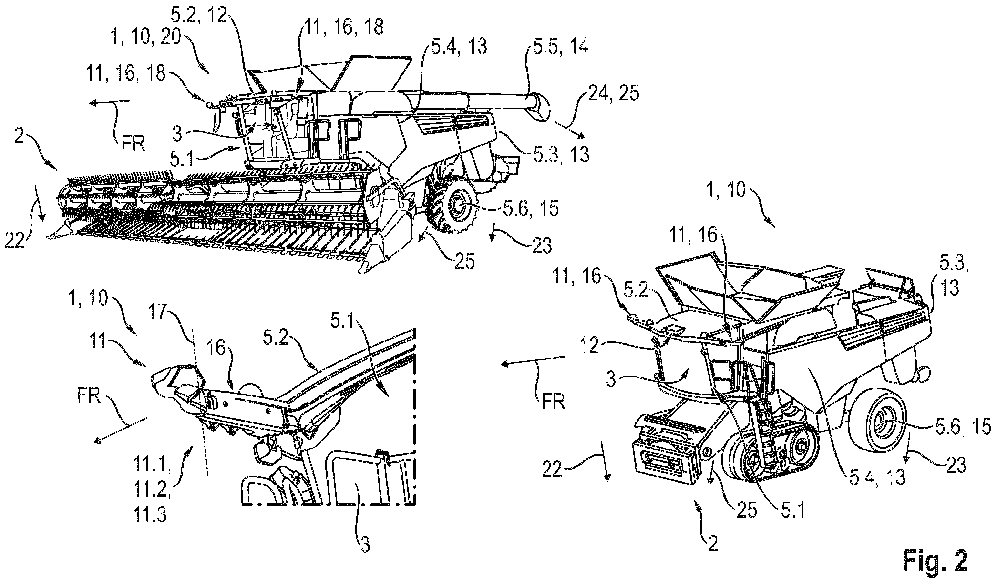

Fig. 2 oben links zeigt eine landwirtschaftliche Arbeitsmaschine 1, die als Mähdrescher ausgebildet ist. In Fahrtrichtung FR vorne ist ein Erntevorsatzgerät 2 zur Ernte vorgesehen. Die Arbeitsmaschine 1 weist eine Fahrzeugkabine 5.1 auf, in der eine zum Anzeigen von Bilddaten und Prozessdaten eingerichtete Visualisierungseinrichtung 3 mit mehreren Displays vorgesehen ist. Die Arbeitsmaschine 1 weist ferner eine Überwachungseinrichtung 10 mit fünf Kamerasystemen 11, 12, 13, 14, 15 zum Erfassen von Sichtbereichen 21, 22, 23, 24, 25 im Umfeld der Arbeitsmaschine 1 auf. Ferner sind Reinigungssysteme 18 zum Reinigen der Kamerasysteme 11, 12, 13, 14, 15 sowie eine Datenverarbeitungseinheit 20 vorgesehen. Die Datenverarbeitung ist zur Generierung von kontextrelevanten Prozessdaten und Bilddaten jeweils auf Grundlage von den erfassten Sichtbereichen 21, 22, 23, 24, 25 eingerichtet, wobei Kameras des Kamerasystems 11, 12, 13, 14, 15 an Tragstrukturen 5 der Arbeitsmaschine 1 und mit fester räumlicher Zuordnung zueinander befestigt vorgesehen sind.

Die Datenverarbeitungseinheit 20 ist eingerichtet, numerische Prozessdaten zu generieren. Die numerischen Prozessdaten dienen zur quantitativen Erfassung eines im Nutzungskontext der Arbeitsmaschine 1 durchgeführten Arbeitsprozesses. So kann ein Maschinenführer Anomalien bei der Ernte erkennen, beispielsweise Ort oder Menge von Lagegetreide oder dergleichen.

Ferner sind zwei Arme 16 vorgesehen, an denen jeweils das erste Kamerasystem 11 angeordnet ist. Mittels des ersten Kamerasystems 11 wird ein Spiegelersatzsystem bereitgestellt. Insbesondere ist die Datenverarbeitungseinheit 20 eingerichtet, Bilddaten für die Visualisierungseinrichtung 3 als das Spiegelersatzsystem bereitzustellen. Die Bilddaten beinhalten Ausschnitte, Zusammenschnitte und optional perspektivisch korrigierte Darstellungen der Sichtbereiche 21, 22, 23, 24 und/oder 25. Einem Maschinenführer wird eine ergonomisch günstige Umfeldansicht bereitgestellt.

Die Datenverarbeitungseinheit 20 kann in verschiedenen Betriebsmodi betrieben werden, beispielsweise in einem Straßen-Betriebsmodus, in dem dauerhaft das Spiegelersatzsystem bereitgestellt wird, und in einem Arbeits-Betriebsmodus. Ferner kann die Datenverarbeitungseinheit 20 Bilddaten bereitstellen, mit denen eine aus mehreren der Sichtbereiche 21, 22, 23, 24, 25 zusammengesetzte Umfeldansicht für den Maschinenführer ermöglicht ist. Beispielsweise können Rückspiegel und Außenspiegel durch die Umfeldansicht ersetzt werden.

Die Datenverarbeitungseinheit 20 kann Prozessdaten und Bilddaten in Abhängigkeit von einem durchgeführten Arbeitsprozess der Arbeitsmaschine 1, von einem Nutzerbefehl und von einer Schalterstellung bereitstellen. Die Datenverarbeitungseinheit 20 kann die Bilddaten und die Prozessdaten verändern und/oder auswählen.

Das erste Kamerasystem 11 umfasst mehrere Kameras. Das erste Kamerasystem 11 ist mittels der Arme 16 zum Schwenken jeweils um eine zumindest im Wesentlichen vertikale Schwenkachse eingerichtet. Beispielsweise kann der Arm eingeklappt werden, um zumindest das erste Kamerasystem 11 vor oder bei Kollisionen zu schützen.

Das zweite Kamerasystem 12 umfasst zwei benachbarte Kameras und ist an einem Kabinendach 5.2 angeordnet bzw. darin integriert und kann den in Fahrtrichtung FR im Wesentlichen vorderseitig zum Erntevorsatzgerät 2 gelegenen und das Erntevorsatzgerät 2 enthaltenden Sichtbereichs 22 eingerichtet.

Das dritte Kamerasystem 13 weist mehrere, insbesondere an zwei Seiten der Arbeitsmaschine 1 gegenüberliegende, Kameras auf und ist an einer als Seitenklappe 5.4 bzw. Verkleidungsteil ausgebildeten Tragstruktur 5 angeordnet. Das dritte Kamerasystem 13 dient zum Erfassen eines Sichtbereichs 23 zur Generierung von eine Vogelperspektive bzw. einen Bird-View enthaltenden Bilddaten.

Das vierte Kamerasystem 14 weist zumindest eine Kamera auf und ist an einer als Überladevorrichtung 5.5 ausgebildeten Tragstruktur 5 angeordnet. Das vierte Kamerasystem 14 kann einen Zielbereich von zu überladendem Erntegut als den Sichtbereich 24 erfassen.

Das fünfte Kamerasystem 15 weist mehrere Kameras auf und ist zwischen Erntevorsatzgerät 2 und Heckachse bzw. Triebachse 5.6 angeordnet. Das fünfte Kamerasystem 15 kann den das Erntevorsatzgerät 2 enthaltenden Sichtbereich 25 erfassen.

Die Datenverarbeitungseinheit 20 ist eingerichtet, Bilddaten bereitzustellen, die Tragstrukturen, Teile und/oder Abschnitte der Arbeitsmaschine 1 zumindest abschnittsweise unsichtbar erscheinen lassen können, wenn die Bilddaten im Blickfeld eines Maschinenführers mittels der Visualisierungseinrichtung 3 angezeigt werden. Beispielsweise ist die Visualisierungseinrichtung 3 bzw. deren Displays hierzu an der A-Säule angeordnet, wobei die A-Säule eine Tragstruktur der Arbeitsmaschine 1 darstellt.

Fig. 2 unten links zeigt eine landwirtschaftliche Arbeitsmaschine 1 ausschnittsweise. Gezeigt ist ein in Fahrtrichtung FR linksseitig an einer Fahrzeugkabine 5.1, insbesondere an deren Kabinendach 5.2, angeordneter Arm 16 mit einem ersten Kamerasystem 11 einer Überwachungseinrichtung 10. Das erste Kamerasystem 11 kann an einem Schwenkteil des Arms 16 um eine im Wesentlichen vertikale Schwenkachse 17 geschwenkt werden. Das erste Kamerasystem 11 weist zumindest eine erste 11.1, zumindest eine zweite 11.2, und zumindest eine dritte 11.3 Kamera auf, die jeweils unterschiedliche Sichtbereiche adressieren. Bei den Sichtbereichen handelt es sich beispielsweise um einen oder mehrere Sichtbereiche wie in Fig. 1 links gezeigt, die dort mit 21.1, 21.2, 21.3 bzw. 23 referenziert sind.

Weiter bezugnehmend auf Fig. 2 unten links ist dargestellt, dass eine in der Fahrzeugkabine 5.1 angeordnete Visualisierungseinrichtung 3 vorgesehen ist. Die Visualisierungseinrichtung kann von einer nicht näher gezeigten Datenverarbeitungseinheit, beispielsweise ein Computer bzw. ein Steuergerät, auf Grundlage von Daten des Kamerasystems 11 generierte kontextrelevante Prozessdaten und Bilddaten anzeigen bzw. einem Maschinenführer visualisieren. Ersichtlich weist der Arm 16 keinen Außenspiegel bzw. kein spiegelndes Element auf. Letztlich kann auf physikalische Spiegel verzichtet werden.

Fig. 2 rechts zeigt eine landwirtschaftliche Arbeitsmaschine 1, beispielsweise in Form eines Mähdreschers. Ein in Fahrtrichtung FR vorderseitig angeordnetes Erntevorsatzgerät 2 ist teilweise ausgeblendet dargestellt. In einer Fahrzeugkabine 5.1 ist eine zum Anzeigen von Bilddaten und Prozessdaten eingerichtete Visualisierungseinrichtung 3 mit Displays vorgesehen. Die Arbeitsmaschine 1 weist eine Überwachungseinrichtung 10 mit Kamerasystemen 11, 12, 13, 15 zum Erfassen von Sichtbereichen 22, 23, 25 im Umfeld der Arbeitsmaschine 1, Reinigungssysteme zum Reinigen der Kamerasysteme 11, 12, 13, 15 und eine Datenverarbeitungseinheit 20 auf. Die Datenverarbeitungseinheit 20 ist zur Generierung von kontextrelevanten Prozessdaten der Arbeitsmaschine 1 und Bilddaten jeweils auf Grundlage von den erfassten Sichtbereichen 22, 23, 25 eingerichtet. Alle Kameras der Kamerasysteme 11, 12, 13, 15 sind an Tragstrukturen 5 der Arbeitsmaschine 1 mit fester räumlicher Zuordnung zueinander befestigt vorgesehen.

Bei der in Fig. 2 rechts gezeigten Ausgestaltungsvariante ist ein erstes Kamerasystem 11, genauer gesagt dessen Kameras, an zwei schwenkbaren Armen 16 angeordnet. Ein zweites Kamerasystem 12 ist in ein Kabinendach 5.2 integriert, um den Sichtbereich 22 mit zwei Kameras zu erfassen. Ein drittes Kamerasystem 13 ist an einer als Strohhaube ausgebildeten Außenverkleidung 5.3 und an einer Seitenklappe 5.4 angeordnet und zum Erfassen des mit 23 referenzierten Sichtbereichs vorgesehen. Ein viertes Kamerasystem ist ausgeblendet und ist mit zumindest einer Kamera an einer ebenfalls ausgeblendeten Überladevorrichtung vorgesehen. Ein fünftes Kamerasystem 15 ist zwischen einer Triebachse 5.6 und dem Vorsatzgerät 2, insbesondere an einer Unterseite der Arbeitsmaschine 1, zum Erfassen des mit 25 referenzierten Sichtbereichs vorgesehen.

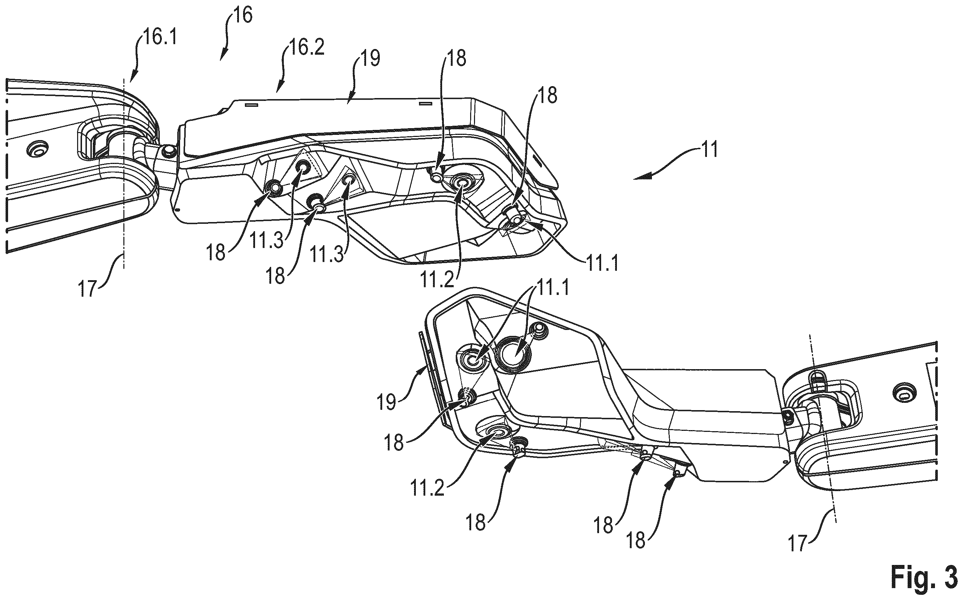

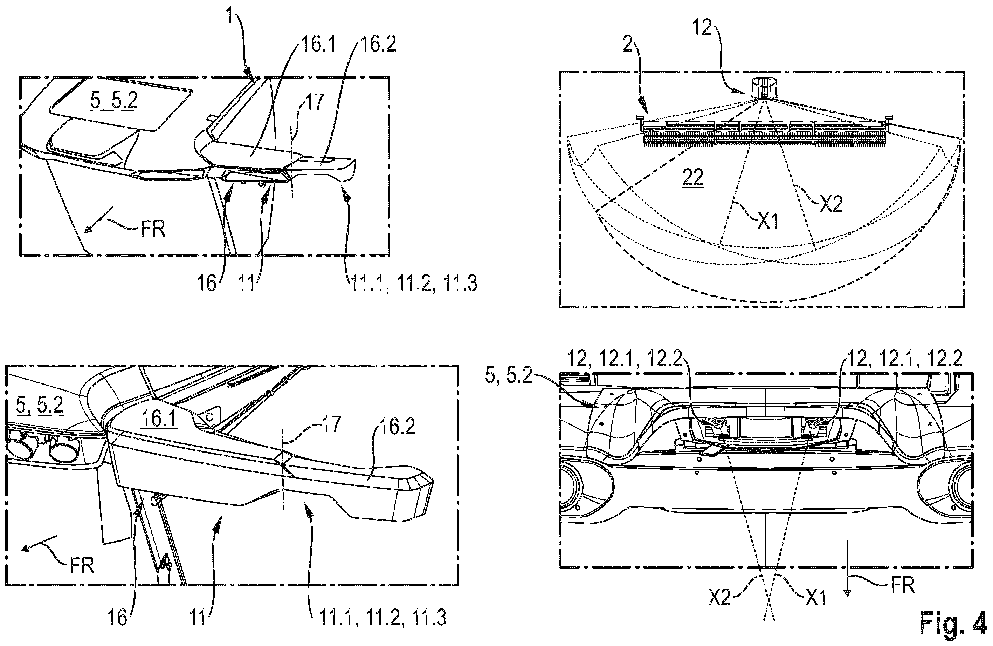

Fig. 3 zeigt einen Arm 16 in perspektivischer Ansicht, einmal von einer Vorderseite (links in Fig. 3) und einmal von einer Rückseite (rechts in Fig. 3). Der Arm 3 ist zum Schwenken um eine im Wesentlichen vertikale Schwenkachse 17 ausgebildet. Der Arm 16 ist zur Befestigung in einer Außenspiegelposition einer Arbeitsmaschine ausgebildet, wobei an dem Arm 16 ein Kamerasystem 11, insbesondere ein erstes Kamerasystem 11, einer Überwachungseinrichtung festgelegt ist. Die Außenspiegelposition ist beispielsweise auch an den in Fig. 2 und Fig. 4 gezeigten Armen 16 ersichtlich. Der Arm 16 weist zur schwenkbaren Befestigung des ersten Kamerasystems 11 ein Halteteil 16.1 und ein Schwenkteil 16.2 auf. Das Schwenkteil 16.2 ist um die Schwenkachse 17 an dem Halteteil 16.1 motorisch schwenkbar festgelegt. Das Schwenkteil 16.2 kann motorisch rückgestellt werden, beispielsweise nachdem es bei einer Kollision verschwenkt wurde. Das Schwenkteil 16.2 ist überlastgeschützt gegenüber dem Halteteil 16.1 schwenkbar, um im Fall einer Kollision Schäden zu vermeiden. Ferner sind mehrere, verstellbare Düsen aufweisende, Reinigungssysteme 18 an dem Arm 16 vorgesehen.

Das erste Kamerasystem 11 und die Reinigungssysteme 18 sind in dem Schwenkteil 16.2 verbaut. Das Schwenkteil 16.2 weist einen in Fahrtrichtung FR vorgelagerten Schild 19 auf. Das Schwenkteil 16.2 bildet ferner eine Abschattung gegen Sonnenlicht aus.

Das Kamerasystem 11 weist mehrere Kameras 11.1, 11.2, 11.3 auf, genauer gesagt zwei erste Kameras 11.1, eine zweite Kamera 11.2 und zwei dritte Kameras 11.3.

Die ersten Kameras 11.1 weisen im Wesentlichen entgegen einer Fahrtrichtung FR zum Erfassen eines in Fahrtrichtung FR im Wesentlichen rückwärtig zur Arbeitsmaschine 1 gelegenen Sichtbereichs 21.1 zur Generierung von den Bilddaten, vgl. auch Fig. 1 links.

Die zweite Kamera 11.2 weist im Wesentlichen zum Boden zum Erfassen eines in einem Nahbereich um die Arbeitsmaschine 1 gelegenen und/oder ein Erntevorsatzgerät 2 zumindest abschnittsweise enthaltenden Sichtbereichs 21.2 zur Generierung von Bilddaten und Prozessdaten, vgl. auch Fig. 1 links.

Die dritten Kameras 11.3 weisen im Wesentlichen in Fahrtrichtung FR und zum Boden zum Erfassen eines in Fahrtrichtung FR im Wesentlichen vorderseitig zu einem Erntevorsatzgerät 2 gelegenen und das Erntevorsatzgerät 2 zumindest abschnittsweise enthaltenden Sichtbereichs 21.3 zur Generierung von den Prozessdaten, vgl. auch Fig. 1 links.

Je Kamera 11.3, 11.2, 11.3 ist ein Reinigungssystem 18 mit einer Düse zum Ausstoßen von Druckluft auf die jeweilige Kamera 11.1, 11.2, 11.3 vorgesehen. Die Neigungen der Düsen sind vorzugsweise motorisch einstellbar. Bei jeder Düse ist ein Sprühkegel für die Druckluft angedeutet, der zu einer jeweiligen optischen Öffnung bzw. Linse gerichtet ist.

Fig. 4 oben links und unten links zeigen exemplarisch eine Kabinendach 5.2 als Tragstruktur 5 einer Arbeitsmaschine 1, an welchem Kabinendach 5.2 ein Arm 16 in einer Außenspiegelposition festgelegt ist. Dargestellt ist ein in Fahrtrichtung FR links angeordneter Arm 16, wobei in Fahrtrichtung FR rechts bzw. gegenüberliegend ebenfalls ein gleichartiger Arm 16 vorgesehen ist.

Ein Schwenkteil 16.2 des Arms 16 kann gegenüber einem Halteteil 16.1 um eine Schwenkachse 17 verschwenkt werden, insbesondere motorisch. Bei einer Kollision oder zum Rangieren kann das Schwenkteil 16.2 beispielsweise unter Überwindung eines Überlastschutzes, z.B. ausgebildet als ein zwischen Schwenkteil 16.2 und Halteteil 16.1 wirkendes, insbesondere federbelastetes Nockenpaket, einklappen. Der Arm 16 trägt am Schwenkteil 16.2 Kameras 11.1, 11.2, 11.3 eines ersten Kamerasystems 11 einer Überwachungseinrichtung der Arbeitsmaschine 1. Die Kameras 11.1, 11.2, 11.3 sind in fester räumlicher Zuordnung zueinander befestigt und stellen eine Perspektive für zu erfassende Sichtbereiche bereit, auf Grundlage der kontextrelevante Prozessdaten und Bilddaten für ein Spiegelersatzsystem bereitgestellt werden können. Anders gesagt kann sowohl ein Arbeitsprozess quantifiziert werden und es kann ein verbesserter Überblick geschaffen werden, was einem Maschinenführer insgesamt auf Displays angezeigt werden kann.

Fig. 4 oben rechts zeigt eine Arbeitsmaschine 1 in Form eines Mähdreschers mit Blick auf sein Erntevorsatzgerät 2 im Wesentlichen von vorne, also mit Blickrichtung im Wesentlichen entgegen einer Fahrtrichtung. Fig. 4 unten rechts zeigt die Arbeitsmaschine 1 in einem Detail im Bereich eines Kabinendachs 5.2 und mit Blick auf ein zweites Kamerasystem 12 einer Überwachungseinrichtung. Dargestellt sind Sichtbereiche 22 des zweiten Kamerasystems 12, das in einer Tragstruktur 5 der Arbeitsmaschine 1, genauer gesagt im Kabinendach 5.2, integriert angeordnet ist. Das zweite Kamerasystem 12 weist zwei Kameras 12.1, 12.2 auf, deren optische Achsen X1, X2 sich in Fahrtrichtung vor den zwei Kameras 12.1, 12.2 kreuzen.

Die optischen Achsen X1, X2 kreuzen sich vorliegend in einer Draufsicht auf die Arbeitsmaschine 1, insbesondere mit Blickrichtung im Wesentlichen orthogonal zur Fahrtrichtung FR, in einem Abstand innerhalb von 5 m vor den Kameras 12.1, 12.2, vorzugsweise innerhalb von 2,5 m, weiter vorzugsweise innerhalb von 1 m.

Dargestellt und beschrieben sind Arbeitsmaschinen 1, die mittels eines Verfahrens zum Betrieb betrieben werden können. Bei dem Verfahren führt die Arbeitsmaschine 1 einen Arbeitsprozess durch und ein Kamerasystem 11, 12, 13, 14,15 oder mehrere davon erfassen Sichtbereiche 21, 22, 23, 24, 25. Es werden kontextrelevante Prozessdaten der Arbeitsmaschine 1 und Bilddaten eines Umfelds der Arbeitsmaschine 1 auf Grundlage von den erfassten Sichtbereichen 21, 22, 23, 24, 25 generiert. Die Prozessdaten und die Bilddaten werden beispielsweise auf einer Visualisierungseinheit 3 in der Arbeitsmaschine 1 angezeigt.

### Bezugszeichenliste:

- 1: Arbeitsmaschine
- 2: Erntevorsatzgerät
- 3: Visualisierungseinrichtung
- 5: Tragstruktur
- 5.1: Fahrzeugkabine
- 5.2: Kabinendach
- 5.3: Außenverkleidung
- 5.4: Seitenklappe
- 5.5: Überladevorrichtung
- 5.6: Triebachse
- 10: Überwachungseinrichtung
- 11-15: Kamerasystem
- 11.1: Kamera
- 11.2: Kamera
- 11.3: Kamera
- 12.1: Kamera
- 12.2: Kamera
- 16: Arm
- 16.1: Halteteil
- 16.2: Schwenkteil
- 17: Schwenkachse
- 18: Reinigungssystem
- 19: Schild
- 20: Datenverarbeitungseinheit

- 21-25: Sichtbereich
- FR: Fahrtrichtung
- X1: optische Achse
- X2: optische Achse

## Patentansprüche

1. Landwirtschaftliche Arbeitsmaschine (1), vorzugsweise Mähdrescher oder Feldhäcksler, mit einer zum Anzeigen von Bilddaten und Prozessdaten eingerichteten Visualisierungseinrichtung (3),
**gekennzeichnet durch**
eine Überwachungseinrichtung (10) mit einem Kamerasystemen (11, 12, 13, 14, 15) zum Erfassen von Sichtbereichen (21, 22, 23, 24, 25) im Umfeld der Arbeitsmaschine (1), ein Reinigungssystem (18) zum Reinigen des Kamerasystems (11, 12, 13, 14, 15) und eine Datenverarbeitungseinheit (20),
wobei die Datenverarbeitungseinheit (20) zur Generierung von kontextrelevanten Prozessdaten der Arbeitsmaschine (1) und Bilddaten jeweils auf Grundlage von den erfassten Sichtbereichen (21, 22, 23, 24, 25) eingerichtet ist, und
wobei Kameras (11.1, 11.2, 11.3) des Kamerasystems (11, 12, 13, 14, 15) an wenigstens einer Tragstruktur (5) der Arbeitsmaschine (1) und mit fester räumlicher Zuordnung zueinander befestigt vorgesehen sind.

2. Landwirtschaftliche Arbeitsmaschine (1) nach Anspruch 1,
**dadurch gekennzeichnet, dass**
die Datenverarbeitungseinheit (20) eingerichtet ist, numerische Prozessdaten zu generieren, die zur quantitativen Erfassung eines im Nutzungskontext der Arbeitsmaschine (1) durchgeführten Arbeitsprozesses dienen.

3. Landwirtschaftliche Arbeitsmaschine (1) nach einem der voranstehenden Ansprüche,
**dadurch gekennzeichnet, dass**
die Datenverarbeitungseinheit (20) eingerichtet ist, Bilddaten für die Visualisierungseinrichtung (3) als ein Spiegelersatzsystem bereitzustellen, wobei die Bilddaten Ausschnitte, Zusammenschnitte und/oder perspektivisch korrigierte Darstellungen der Sichtbereiche (21, 22, 23, 24, 25) umfassen.

4. Landwirtschaftliche Arbeitsmaschine (1) nach einem der voranstehenden Ansprüche,
**dadurch gekennzeichnet, dass**
die Datenverarbeitungseinheit (20) zum Betreiben in verschiedenen Betriebsmodi eingerichtet ist, umfassend einen Straßen-Betriebsmodus und einen Arbeits-Betriebsmodus, wobei im Straßen-Betriebsmodus dauerhaft ein/das Spiegelersatzsystem bereitgestellt wird.

5. Landwirtschaftliche Arbeitsmaschine (1) nach einem der voranstehenden Ansprüche,
**dadurch gekennzeichnet, dass**
die Datenverarbeitungseinheit (20) eingerichtet ist, Bilddaten bereitzustellen, die eine aus mehreren der Sichtbereichen (21, 22, 23, 24, 25) zusammengesetzte Umfeldansicht für einen Maschinenführer ermöglichen.

6. Landwirtschaftliche Arbeitsmaschine (1) nach einem der voranstehenden Ansprüche,
**dadurch gekennzeichnet, dass**
die Datenverarbeitungseinheit (20) eingerichtet ist, Prozessdaten und Bilddaten in Abhängigkeit von einem durchgeführten Arbeitsprozess der Arbeitsmaschine (1), eines Nutzerbefehls und/oder einer Schalterstellung bereitzustellen, und insbesondere eingerichtet ist, die Bilddaten und/oder die Prozessdaten aufgrund des Nutzerbefehls und/oder der Schalterstellung zu verändern und/oder auszuwählen.

7. Landwirtschaftliche Arbeitsmaschine (1) nach einem der voranstehenden Ansprüche,
**gekennzeichnet durch,**
einen Arm (16) zur Befestigung in einer Außenspiegelposition der Arbeitsmaschine (1), wobei an dem Arm (16) das Kamerasystem (11, 12, 13, 14, 15) festgelegt ist.

8. Landwirtschaftliche Arbeitsmaschine (1) nach einem der voranstehenden Ansprüche,
**gekennzeichnet durch,**
ein erstes Kamerasystem (11), das umfasst:
eine erste Kamera (11.1), die im Wesentlichen entgegen einer Fahrtrichtung (FR) zum Erfassen eines in Fahrtrichtung (FR) im Wesentlichen rückwärtig zur Arbeitsmaschine (1) gelegenen Sichtbereichs (21.1) zur Generierung von den Bilddaten weist,
eine zweite Kamera (11.2), die im Wesentlichen zum Boden zum Erfassen eines in einem Nahbereich um die Arbeitsmaschine (1) gelegenen und/oder ein Erntevorsatzgerät (2) zumindest abschnittsweise enthaltenden Sichtbereichs (21.2) zur Generierung von den Bilddaten und/oder den Prozessdaten weist, und/oder
eine dritte Kamera (11.3), die im Wesentlichen in Fahrtrichtung (FR) und/oder zum Boden zum Erfassen eines in Fahrtrichtung (FR) im Wesentlichen vorderseitig zu einem/dem Erntevorsatzgerät (2) gelegenen und das Erntevorsatzgerät (2) zumindest abschnittsweise enthaltenden Sichtbereichs (21.3) zur Generierung von den Prozessdaten weist.

9. Landwirtschaftliche Arbeitsmaschine (1) nach einem der voranstehenden zwei Ansprüche,
**dadurch gekennzeichnet, dass**
das erste Kamerasystem (11) mittels des Arms (16) zum Schwenken um eine zumindest im Wesentlichen vertikale Schwenkachse (17) eingerichtet ist.

10. Landwirtschaftliche Arbeitsmaschine (1) nach dem voranstehenden Anspruch,
**dadurch gekennzeichnet, dass**
der Arm (16) zur schwenkbaren Befestigung des ersten Kamerasystems (11) ein Halteteil (16.1) und ein Schwenkteil (16.2) aufweist, wobei das Schwenkteil (16.2) überlastgeschützt um die Schwenkachse (17) an dem Halteteil (16.1) vorzugsweise motorisch schwenkbar, bevorzugt motorisch rückstellbar, festgelegt ist.

11. Landwirtschaftliche Arbeitsmaschine (1) nach dem voranstehenden Anspruch,
**dadurch gekennzeichnet, dass**
das erste Kamerasystem (11) und das Reinigungssystem (18) zumindest teilweise in dem Schwenkteil (16.2) verbaut sind, bevorzugt wobei das Schwenkteil (16.2) einen in Fahrtrichtung (FR) vorgelagerten Schild (19) aufweist und/oder eine Abschattung gegen Sonnenlicht für das erste Kamerasystem (11) aufweist.

12. Landwirtschaftliche Arbeitsmaschine (1) nach einem der voranstehenden Ansprüche,
**gekennzeichnet durch,**
ein zweites Kamerasystem (12), das an einem/dem Kabinendach (5.2) angeordnet und/oder darin integriert ist und zum Erfassen eines in Fahrtrichtung (FR) im Wesentlichen vorderseitig zu einem/dem Erntevorsatzgerät (2) gelegenen und/oder ein/das Erntevorsatzgerät (2) zumindest abschnittsweise enthaltenden Sichtbereichs (22) eingerichtet ist,
vorzugsweise wobei das zweite Kamerasystem (12) zwei benachbarte Kameras (12.1, 12.2) aufweist, deren optische Achsen (X1, X2) sich längs der Fahrtrichtung (FR) vor den zwei benachbarten Kameras (12.1, 12.2) kreuzen.

13. Landwirtschaftliche Arbeitsmaschine (1) nach einem der voranstehenden Ansprüche,
**dadurch gekennzeichnet, dass**
das Reinigungssystem (18) eine Düse zum Ausstoßen von Druckluft und/oder Flüssigkeit auf das Kamerasystem (11, 12, 13, 14, 15) und/oder auf zumindest eine der Kameras (11.1, 11.2, 11.3) aufweist, bevorzugt wobei eine Neigung der Düse einstellbar ist.

14. Landwirtschaftliche Arbeitsmaschine (1) nach dem voranstehenden Anspruch,
**dadurch gekennzeichnet, dass**
mehrere Düsen vorgesehen sind, wobei je Kamera (11.1, 11.2, 11.3) und/oder je Kamerasystem (11, 12, 13, 14, 15) eine Düse vorgesehen ist.

15. Verfahren zum Betrieb einer nach einem der voranstehenden Ansprüche ausgebildeten landwirtschaftlichen Arbeitsmaschine (1), wobei
die Arbeitsmaschine (1) einen Arbeitsprozess durchführt,
das Kamerasystem (11, 12, 13, 14,15) Sichtbereiche (21, 22, 23, 24, 25) erfasst,
kontextrelevante Prozessdaten der Arbeitsmaschine (1) und Bilddaten eines Umfelds der Arbeitsmaschine (1) auf Grundlage von den erfassten Sichtbereichen (21, 22, 23, 24, 25) generiert werden, und
die Prozessdaten und die Bilddaten angezeigt werden.
